# EUROPEAN PATENT APPLICATION

(11) **EP 1 568 909 A1**
(43) Date of publication of application: **31.08.2005**
(21) Application number: 05075383.9
(22) Date of filing: 17.02.2005
(51) Int. Cl.: F16D 55/02, F16D 65/14, F16D 67/06

(54) **Brake in particular for weaving machines**

(30) Priority: 27.02.2004 IT MI20040353
(71) Applicant: Baruffaldi S.p.A., Milan (IT)
(72) Inventor: Boffelli, Piercarlo, 20122 Milano (IT)
(74) Representative: Raimondi, Margherita

(57) **Abstract**

Electromagnetic brake comprising an annular body (110) which is integral with a flange (120) and which has a coil (130) arranged inside it, said annular body having a C-shaped cross-section which is axially closed by a ring (140;1140,1141) for closing the opening defined by the longitudinal arms (111) of the "C", said closing ring being made of friction material and the flange (120) being integral with the external surface of the transverse arm (112) of the "C" of the annular body (110). The C-shaped cross-section of the annular body is obtained by means of drawing.

## Description

The present invention relates to a brake for stopping shafts of weaving/textile machines.

It is known in the technical sector relating to the production of textile machines that there is a need for an engaging coupling comprising a brake/clutch assembly arranged between the shaft of the main actuating motor and the driven shaft of the textile machine. This assembly has the function of allowing start-up of the textile machine and, vice versa, stoppage and locking of its shaft in the case where it is required to stop the machine, for example, in order to restore a shed following breakage of the yarn.

Constructional examples of these assemblies include embodiments of the electromagnetic type, i.e. comprising electromagnets able to be activated so as to cause the alternate attraction/release of an armature integral with the driven shaft of the textile machine in order to couple it (via clutch) to a rotor integral with the driving shaft and thus cause rotation of the said shaft, or to a static brake in order to cause stoppage of the driven shaft.

It is also known that, although fulfilling their function, the electromagnetic brake/clutch assemblies known in the art are very complicated to produce in that they require the use of materials pressed and/or forged as bars which must be machined on a machine-tool with successive passes of the workpiece, resulting, therefore, in a large amount of downtime and high costs.

The technical problem which is posed, therefore, is that of providing a brake of the so-called multiple magnetic circuit type, in particular for weaving/textile machines, which is easy and inexpensive to produce, install and maintain.

Within the context of this problem it is also required that this brake should be able to be inserted in a brake/clutch assembly for actuating/stopping the driven shaft of weaving/textile machines and/or the like.

This technical problem is solved according to the present invention by an electromagnetic brake comprising an annular body which is integral with a flange and which has a coil (130) arranged inside it, said annular body having a C-shaped cross-section which is axially closed by a ring for closing the opening defined by the longitudinal arms of the "C", said closing ring being made of friction material and the flange being integral with the outer surface of the transverse arm of the "C" of the annular body.

The present invention relates furthermore to a method for production of the brake according to the present invention, and a brake/clutch assembly, for weaving/textile machines, the brake of which is designed as described above.

Further details and characteristic features will become clear from the description which follows of a non-limiting example of embodiment of the device according to the present invention provided with reference to the accompanying figures in which:
Figure 1 shows a schematic cross-sectional view, along the plane indicated by I-I in Fig. 1, of a brake according to the present invention;
Figure 2 shows a cross-section along the plane indicated by II-II in Fig. 1;
Figure 3 shows a partial schematic cross-section through a brake/clutch assembly of a textile machine with brake according to the present invention;
Figure 4 shows a schematic cross-sectional view, along the plane indicated by IV-IV of Fig. 5, of a second example of embodiment of the brake according to the present invention;
Figure 5 shows a cross-section along the plane indicated by V-V in Fig. 4; and
Figure 6 shows a partial schematic cross-section through a brake/clutch assembly of a textile machine with brake according to the embodiment of Fig. 4.

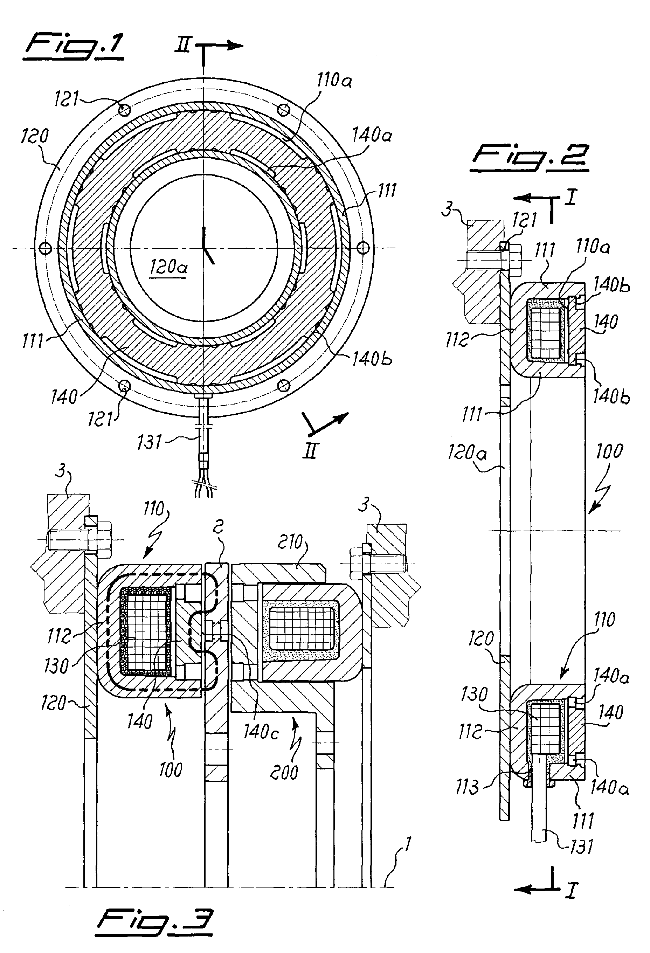

As shown in Figs. 1 and 2, the brake 100 according to the present invention comprises an annular body 110 with a cross-section substantially in the form of a "C" with parallel arms 111 defined for the sake of convenience as being longitudinal and a transverse arm 112 integral with a support flange 120 provided with holes 121 for fixing to fixed parts 3, as will emerge more clearly below in connection with Fig. 3.

The annular body 110 forms essentially a C-shaped seat 110a which houses a coil 130 kept in position in a conventional manner, for example by means of resins or the like, and provided with an associated power supply cable 131 which emerges from the flange via a corresponding hole 113 and is connected to the control and actuating means (not shown).

The front opening of the seat 110a of the "C" is closed by a closing ring 140, which is made of foil material with a low carbon content, shaped so as to have undercuts 140a extending over angular circumferential sections and able to produce segments of radial discontinuity of contact between the longitudinal arms 111 of the "C" and therefore a deviation of the linked magnetic flux produced by the electromagnet, as will emerge more clearly below in connection with operation of the brake/clutch assembly shown in Fig. 3.

In addition to the undercuts 140a the ring also has radial reliefs 140b which are arranged in suitable angular positions and are able to engage with the corresponding longitudinal arms 111 of the "C" in order to produce stable anchoring of the ring 140 to the said "C" so that the former is locked both rotationally and as regards axial displacement relative to the latter.

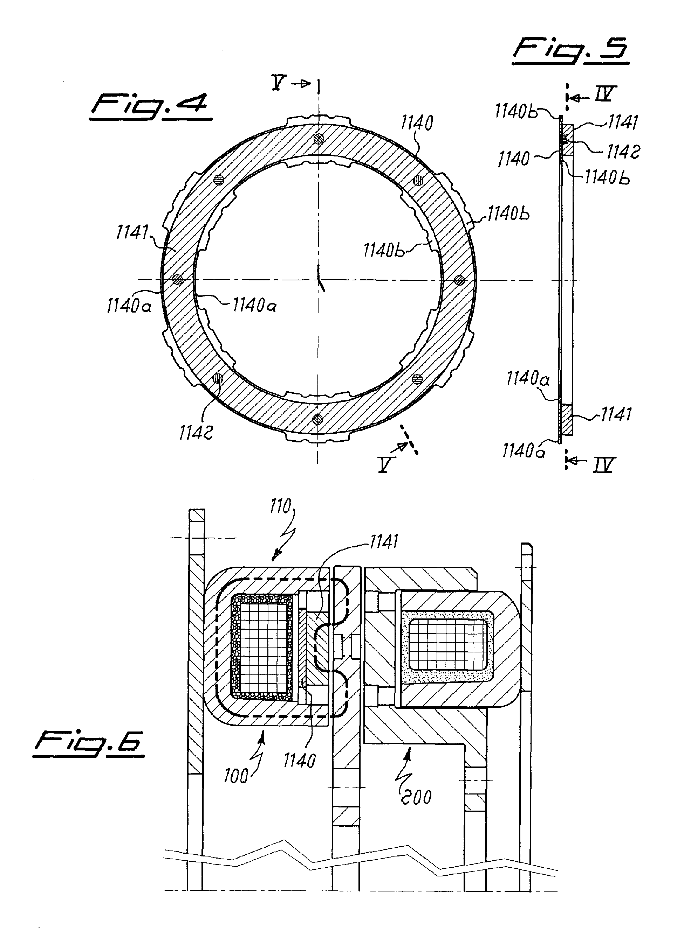

These reliefs 140b may, however, form an element for dispersion of the linked magnetic flux; a second embodiment of the brake is therefore also envisaged (shown in Figs. 4-6), wherein the closing ring is made as two parts, respectively formed by a base 1140, made of non-magnetic material, with the undercuts 1140a and the extensions 1140b, and a ring 1141, made of friction material, fixed to the base 1140 by means of screws/spot welds 1142.

In the this way, the non-magnetic material obliges the whole magnetic flux to follow the path shown in Fig. 6, limiting the amount of dispersion and increasingly, consequently, the torque available.

It is therefore pointed out how the brake according to the invention has a friction surface 140c formed by the closing ring 140 and also by the front end surfaces of the longitudinal arms 111 of the "C", while the transverse arm 112 does not have a working function and is merely used for fastening, for example by means of welding, to the support flange 120.

This means that the annular C-shaped body 110 may be made of material with a low carbon content in the form of a foil or sheet which can be cold-deformed.

This results in the possibility of producing the brake by means of a simplified procedure which envisages the following steps:
a) provision of a disk of predetermined diameter and thickness;
b) machining of the disk so as to obtain an annular body (110) with a C-shaped cross-section;
c) provision of a ring 140 of material with a low carbon content in the form of a foil or sheet which is easily cold-deformable and has a width corresponding to the width of the C-shaped seat;
d) coupling of the annular body with a support ring 120;
e) insertion of a coil 130 inside the C-shaped seat;
f) closing of the C-shaped seat by means of the closing ring;
wherein the said C-shaped seat is obtained by means of drawing.

In connection with the method described above, it is envisaged moreover that:
- the disk to be drawn is made of material with a hardness of between 100 and 130 HB;
- the support flange is welded to the external surface of the transverse arm 112 of the C-shaped annular body;
- the closing ring has internal and external circumferential undercuts able to produce zones for deviation of the magnetic flux induced by excitation of the electromagnet and internal and external radial reliefs able to produce zones of radial contact between the internal surface of the longitudinal arms of the "C" and the outer edge of the closing ring for relative locking of the two parts both in the radial direction and in the axial direction.

It is envisaged, moreover, that the closing ring consists of a base 1140 made of non-magnetic material fixed to the ring 1141 by means of spot welds and/or screws.

As shown in Fig. 3, the brake 100 according to the invention is suitable for forming part of an assembly consisting of brake 100 / clutch 200 for actuating / stopping the shaft 1 of a weaving/textile machine on which it is mounted, the assembly being integral with the fixed parts 3 of the machine.

The shaft 1 also has, mounted thereon in a manner which is conventional and therefore neither illustrated nor described in detail, an armature 2 able to be displaced in an axial direction upon recall of the electromagnetic clutch 200, which is in turn conventional, for coupling to a rotor 210 for transmission of the movement, or to the brake 100, according to the present invention, for stopping the movement of the shaft 1.

From Fig. 3 it can be also be seen how the electromagnetic circuit of the brake 100 is of the so-called "double" type namely with a path of the linked magnetic flux having a dual input/output from the armature 2 in order to increase the useful torque without modifying the dimensions, the double circuit being defined by the above-described annular undercuts 140a of the closing ring 140 which, causing an interruption in the ferromagnetic material, oblige the magnetic flux to follow the path shown in the figure.

From Figure 3 it can also be seen how the active friction surface of the brake is that of the ring 140 closing the "C", while the transverse arm 112 of the "C" is used only to support the brake 100, such that the reduction in the useful surface area due to the rounded zones formed by drawing of the annular C-shaped body is of no consequence.

It is therefore clear how, owing to the special construction of the brake 100, it is possible to obtain a considerable reduction in the machining passes carried out thereon and therefore a considerable reduction in costs, without modifying the useful torque of the brake; it is also clear how the brake may be inserted without substantial difficulty in a brake/clutch assembly for stoppage/transmission of the movement to the shafts of weaving/textile machines.

## Claims

1. Electromagnetic brake comprising an annular body (110) which is integral with a flange (120) and which has a coil (130) arranged inside it, said annular body having a C-shaped cross-section which is axially closed by a ring (140;1140;1141) for closing the opening defined by the longitudinal arms (111) of the "C", **characterized in that** said closing ring is made of friction material and the flange (120) is integral with the external surface of the transverse arm (112) of the "C" of the annular body (110).

2. Brake according to Claim 1, **characterized in that** the annular body (110) is made of ferrous material with a low carbon content.

3. Brake according to Claim 1, **characterized in that** said annular body (110) has a hardness of between 100 and 130 HB.

4. Brake according to Claim 1, **characterized in that** said annular body (110) is obtained by means of drawing.

5. Brake according to Claim 1, **characterized in that** said closing ring (140) consists of a single body made of ferromagnetic material.

6. Brake according to Claim 1, **characterized in that** said closing ring is formed by a base (1140) of non-magnetic material and a ring (1141) of ferromagnetic material which are fixed together by means of fastening means (1142).

7. Brake according to Claim 6, **characterized in that** said fastening means (1142) are spot welds/screws.

8. Brake according to Claim 1, **characterized in that** said closing ring (140;1140,1141) has undercuts (140a; 1140a) extending over angular circumferential sections and able to produce segments of radial discontinuity of contact between the said ring and the longitudinal arms (111) of the "C".

9. Brake according to Claim 1, **characterized in that** it is of the type comprising a double linked magnetic flux circuit.

10. Brake according to Claim 1, **characterized in that** said closing ring (140;1140,1141) has radial reliefs (140b;1140b) arranged in suitable angular positions and suitable for engaging with the corresponding longitudinal arms (111) of the "C" in order to produce stable anchoring of the ring (140) to the said "C".

11. Brake according to Claim 1, **characterized in that** said flange (120) is fastened to the annular body by means of welding.

12. Method for producing a brake according to Claim 1 and comprising the following steps:
a) provision of a disk of predetermined diameter and thickness;
b) machining of the disk so as to obtain an annular body (110) with a C-shaped cross-section;
c) provision of a closing ring (140;1140,1141) made of friction material with a width corresponding to the width of the C-shaped seat;
d) coupling of the annular body with a support ring;
e) insertion of a coil (130) inside the C-shaped seat;
f) closing of the C-shaped seat by means of the closing ring;
**characterized in that** said C-shaped seat is obtained by means of drawing.

13. Method according to Claim 12, **characterized in that** the support flange is welded to the external surface of the transverse arm (112) of the "C" of the annular body.

14. Method according to Claim 12, **characterized in that** said annular body (110) is made of a material with a low carbon content.

15. Assembly consisting of brake (100) / clutch (200) for actuating/stopping the shaft (1) of a weaving/textile machine on which said assembly is mounted, said shaft (1) having, mounted thereon, an armature (2) able to be displaced in the axial direction upon recall of the electromagnetic clutch (200), for coupling to a rotor (210) for transmission of the movement, or to the brake (100), wherein said brake comprises an annular body (110) which is integral with a flange (120) and which has arranged inside it a coil (130), said annular body (110) having a C-shaped cross-section which is axially closed by a ring (140;1140,1141) for closing the opening defined by the longitudinal arms (111) of the "C", **characterized in that** said closing ring (140; 1140, 1141) is made of friction material and the flange (120) is integral with the external surface of the transverse arm (112) of the "C" of the annular body (110).

16. Assembly according to Claim 15, **characterized in that** it is of the type comprising a double linked magnetic flux circuit.

17. Assembly according to Claim 15, **characterized in that** the annular body (110) is made of ferrous material with a low carbon content.

18. Assembly according to Claim 15, **characterized in that** said annular body (110) has a hardness of between 100 and 130 HB.

19. Assembly according to Claim 15, **characterized in that** said annular body (110) is obtained by means of drawing.

20. Assembly according to Claim 15, **characterized in that** said closing ring (140) is made as a single body of ferromagnetic material.

21. Assembly according to Claim 15, **characterized in that** said closing ring is formed by a base (1140) of non-magnetic material and by a ring (1141) of ferromagnetic material which are joined together by means of fastening means (1142).

22. Assembly according to Claim 21, **characterized in that** said fastening means (1142) are spot welds / screws.

23. Assembly according to Claim 15, **characterized in that** said closing ring (140;1140,1141) has undercuts (140a;1140a) extending over angular circumferential sections and able to produce segments of radial discontinuity of contact between the said ring and the longitudinal arms (111) of the "C".

24. Assembly according to Claim 15, **characterized in that** said closing ring (140;1140,1141) has radial reliefs (1140b) arranged in suitable angular positions and able to engage with the corresponding longitudinal arms (111) of the "C" in order to ensure stable anchoring of the ring (140) to the said "C".

25. Assembly according to Claim 15, **characterized in that** said flange (120) is fastened to the annular body by means of welding.
